Europäisches Patentamt

European Patent Office

Office européen des brevets

(19)

(11) Veröffentlichungsnummer : **0 024 036**
**B1**

(12) EUROPÄISCHE PATENTSCHRIFT

(45) Veröffentlichungstag der Patentschrift :
09.03.83

(21) Anmeldenummer : 80104648.3

(22) Anmeldetag : 06.08.80

(51) Int. Cl.³ : **F 16 K 1/228**

(54) Vorrichtung zur Sicherung der Dichtwirkung einer Absperrklappe.

(30) Priorität : 09.08.79 DE 2932338

(43) Veröffentlichungstag der Anmeldung :
18.02.81 Patentblatt 81/07

(45) Bekanntmachung des Hinweises auf die Patenterteilung : 09.03.83 Patentblatt 83/10

(84) Benannte Vertragsstaaten :
**BE DE FR GB IT NL SE**

(56) Entgegenhaltungen :
DE B 1 163 625
DE B 1 500 220
US A 2 132 262
US A 3 038 693

(73) Patentinhaber : **Linde Aktiengesellschaft**
**Abraham-Lincoln-Strasse 21**
**D-6200 Wiesbaden (DE)**

(72) Erfinder : **Leiner, Friedrich**
**Dachauer Strasse 142/III**
**D-8000 München 19 (DE)**
Erfinder : **Wagner, Otto**
**Römerstrasse 75d**
**D-8903 Bobingen (DE)**

(74) Vertreter : **Schaefer, Gerhard, Dr.**
**Linde Aktiengesellschaft Zentrale Patentabteilung**
**D-8023 Höllriegelskreuth (DE)**

EP 0 024 036 B1

## Vorrichtung zur Sicherung der Dichtwirkung einer Absperrklappe.

Die Erfindung betrifft eine Vorrichtung zur Sicherung der Dichtwirkung eines Absperrelementes mit wenigstens einem Dichtelement zwischen Absperrelement und dem abzudichtenden Gehäuse sowie einem metallenen Dichtring, wobei das Dichtelement zwischen einer Stirnseite des Dichtringes und dem Gehäuse und/oder dem Absperrelement in Schließstellung gehalten wird und der Dichtring aus zwei zylinderförmigen, bezüglich der Zylinderachse hintereinanderliegenden Ringteilen besteht, die über eine Einrichtung zur Verstellung des gegenseitigen Abstandes ineinandergreifen, wobei einer der Ringteile mit einer ein parallel zur Zylinderachse liegendes Drehmoment ausübenden Vorrichtung in Verbindung steht und um die Zylinderachse drehbar im Gehäuse gelagert ist, während der andere Ringteil mittels einer Sicherung gegen Drehbewegungen um die Zylinderachse im Gehäuse gelagert ist.

Derartige Absperrvorrichtungen sind bereits bekannt. Üblicherweise sind die Dichtelemente gegen hohe Temperatureinwirkung oder gegen chemisch aggressive Substanzen nicht beständig. Dabei muß das Dichtelement nicht notwendigerweise einer direkten Feuereinwirkung ausgesetzt sein, zur Zerstörung des Dichtelements genügt bereits der Kontakt mit stark erhitztem Fluid. Wird das Dichtelement zerstört, ist die Dichtwirkung des Absperrelementes nicht mehr gewährleistet, so daß ein Durchbrechen des Fluids nicht verhindert werden kann.

Eine Vorrichtung der eingangs erwähnten Art ist in der US-A-3.038.693 angegeben. Über die beiden Ringteile kann jedoch nur der Druck des Dichtelements gegen das Absperrelement eingestellt werden. Bei einer Zerstörung des Dichtelements der bekannten Vorrichtung geht ohne manuelle Nachstellung der ein Drehmoment ausübenden Vorrichtung die Dichtwirkung verloren. In gleicher Weise besitzt das durch die US-A-2.132.262 bekannte Ventil bei zerstörtem Dichtelement keine Dichtwirkung. Durch diese Druckschrift ist eine Einrichtung zur Verstellung des Abstandes koaxialer Ringelemente mittels Nockentrommeln bekannt.

Der Erfindung liegt daher die Aufgabe zugrunde, eine Vorrichtung zu entwickeln, durch die die Dichtwirkung eines Absperrelementes der eingangs beschriebenen Art auch bei zerstörtem Dichtelement gesichert wird.

Diese Aufgabe wird erfindungsgemäß dadurch gelöst, daß das vordere Ringteil nach Zerstörung des Dichtelementes selbst dichtend am Absperrelement und an dem Gehäuse anliegt und die das Drehmoment ausübende Vorrichtung unter Vorspannung arbeitet. Weiter ist das Absperrelement eine Absperrklappe und die Einrichtung zur Verstellung eine Stirnverzahnung.

Erfindungsgemäß ist das Drehmoment, das auf eines der Ringteile wirkt, so orientiert, daß aufgrund der Formgebung der Einrichtung zur Verstellung des gegenseitigen Abstandes der Ringteile auf das das Dichtelement berührende Ringteil — im weiteren auch vorderes Ringteil genannt — eine parallel zur Zylinderachse liegende, in Richtung auf das Dichtelement wirkende Kraft ausgeübt wird. Solange das Dichtelement seine ursprüngliche Form beibehält und seine Funktion, das Gehäuse und die Absperrklappe abdichtend miteinander zu verbinden, erfüllt, ist das vordere Ringteil unbeweglich, so daß beide Ringteile ineinandergreifen. Sobald das Dichtelement, beispielsweise bei hoher Temperatureinwirkung durch Feuer, zerstört wird, versetzt die das Drehmoment ausübende Vorrichtung ein Ringteil in eine Drehbewegung um seine Längsachse. Ist die Einrichtung zur Verstellung des gegenseitigen Abstandes der Ringteile eine Stirnverzahnung, so hebt sich das vordere Ringteil bei der Drehbewegung aus der Verzahnung. Die Höhe der Stirnzähne kann dabei so gewählt werden, daß bei völlig zerstörtem Dichtelement das vordere Ringteil am Gehäuse und an der Absperrklappe in Schließstellung dicht anliegt. Das vordere Ringteil, das natürlich aus feuerfestem Material, vorzugsweise aus Metall, besteht, bewirkt auf diese Weise eine sichere Abdichtung, so daß die Absperrklappe auch bei hohen Temperaturen funktionstüchtig bleibt.

In einer vorteilhaften Ausgestaltung steht der das Dichtelement nicht berührende Ringteil mit der das Drehmoment ausübenden Vorrichtung in Verbindung und ist in axialer Richtung gegen das Gehäuse abgestützt, während der andere Ringteil in einer zur Zylinderachse nur parallele Bewegungen zulassenden Führung gehalten ist.

Der das Dichtelement nicht berührende Ringteil — im weiteren auch hinteres Ringteil genannt — kann somit bezüglich der Zylinderachse nur Drehbewegungen, der vordere Ringteil nur Parallelbewegungen ausführen.

In einer besonders einfach herzustellenden Ausführungsform einer erfindungsgemäßen Vorrichtung ist der das Dichtelement nicht berührende Ringteil fest mit dem Gehäuse und und der andere Ringteil mit der das Drehmoment ausübenden Vorrichtung verbunden.

In dieser Ausgestaltung ist das hintere Ringteil starr mit dem Gehäuse verbunden und somit relativ zum Gehäuse nicht beweglich. Das vordere Ringteil hingegen liegt mit einer Stirnseite am Dichtelement an, während die andere Stirnseite eine Stirnverzahnung trägt, über die das vordere Ringteil bei intaktem Dichtelement in die entsprechende Verzahnung des hinteren Ringteils eingreift. Das vordere Ringteil ist also mit dem Gehäuse nicht fest verbunden und bei nachgebendem Dichtelement in Richtung parallel zur Zylinderachse des Ringteils verschiebbar sowie um die Zylinderachse drehbar.

Mit Vorteil greifen die Ringteile bei intaktem Dichtelement formschlüssig ineinander, da auf diese Weise eine Verschmutzung von Zwischenräumen zwischen den Stirnverzahnungen vermieden wird.

In einer vorteilhaften Ausgestaltung des Erfindungsgedankens sind die Zahnflanken der Stirnverzahnung so geformt, daß auf das das Dichtelement berührende Formteil in axialer Richtung eine konstante Kraft ausgeübt wird.

Das vordere Dichtelement übt somit stets eine konstante Kraft auf das Dichtelement aus. Somit ist die auf das intakte Dichtelement und die bei zerstörtem Dichtelement auf die Absperrklappe und das Gehäuse ausgeübte Kraft etwa gleich groß. Ein Nachlassen der Dichtwirkung bei zerstörtem Dichtelement bedingt durch einen geringen Anpreßdruck des vorderen, aus der Verzahnung gehobenen Dichtelements wird daher vermieden.

Mit Vorteil enthält die das Drehmoment ausübende Vorrichtung eine Feder und ein Seil, wobei das Seil am Umfang des das Dichtelement berührenden Ringteils befestigt ist und durch eine Aussparung im Gehäuse geführt, entlang eines Teiles des Ringumfanges am Ringteil anliegend über eine Spindel mit der gespannten Feder verbunden ist.

Anhand eines schematisch dargestellten Ausführungsbeispieles soll eine erfindungsgemäße Vorrichtung beschrieben und ihre Funktionsweise erläutert werden.

Hierbei zeigt :

Figur 1 eine erfindungsgemäße Schutzeinrichtung mit einer Absperrklappe in Schließstellung und einem intakten Dichtelement ;

Figur 2 einen Schnitt durch die Schutzeinrichtung entlang der in Figur 1 angezeigten Linie II-II.

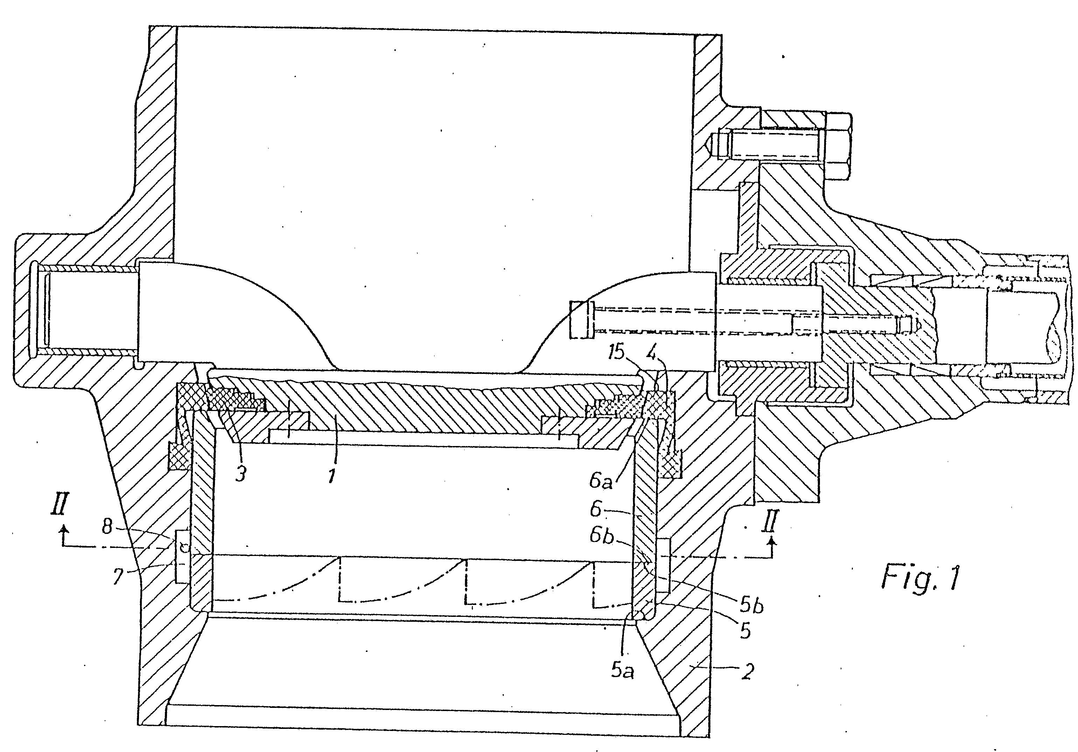

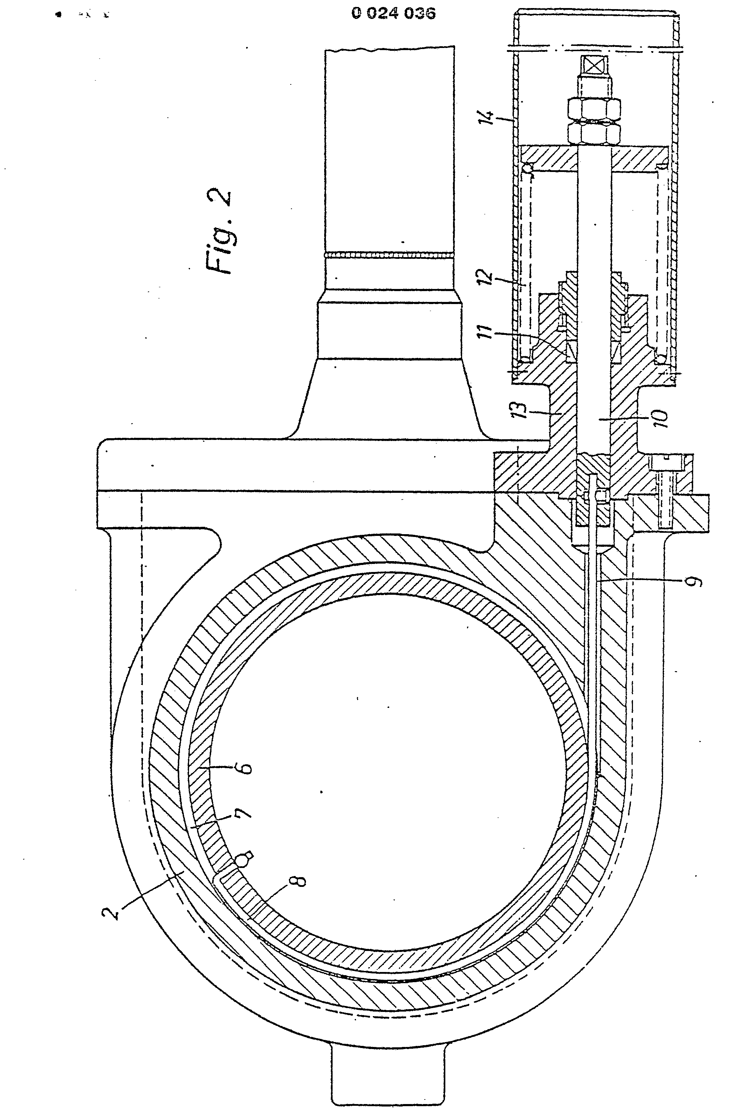

Figur 1 zeigt eine runde Absperrklappe 1 zur Abdichtung einer Öffnung in einem Gehäuse 2 in geschlossenem Zustand. Das Dichtelement besteht im Ausführungsbeispiel aus zwei ringförmigen, beispielsweise aus Polytetrafluoräthylen gefertigten Dichtelementen 3, 4. Je eines der Elemente ist an der Absperrklappe 1 bzw. am Gehäuse 2 angebracht. Mit dem Gehäuse 2 fest verbunden ist ein hinteres Ringteil 5, das mit der einen Stirnseite 5a gegen das Gehäuse 2 abgestützt ist und auf der anderen Stirnseite 5b eine Stirnverzahnung trägt. Zwischen den Dichtelementen 3, 4 und dem hinteren Ringteil 5 ist ein vorderes Ringteil 6 angeordnet, das am Gehäuse 2 anliegt, jedoch nicht starr mit diesem verbunden ist. Das vordere Ringteil 6 berührt mit der einen Stirnfläche 6a das bzw. die Dichtelemente, während es an der gegenüberliegenden Stirnfläche 6b eine Stirnverzahnung trägt, über die das vordere Ringteil 6 und das hintere Ringteil 5 formschlüssig ineinander greifen können. Im Gehäuse 2 ist eine Aussparung 7 vorgesehen, in der ein Seil 8 am Ringteil 5 bzw. 6 anliegend verläuft. Die in Figur 1 der Übersichtlichkeit wegen nicht dargestellte, ein Drehmoment auf das Ringteil 6 ausübende Vorrichtung ist in Figur 2 gezeigt, in der gleiche Teile mit gleichen Bezugsziffern bezeichnet sind. Das Seil 8 ist mit seinem einen Ende am vorderen Ringteil 6 befestigt, liegt an einem Teil des Umfanges dieses Ringteiles an und wird über eine Bohrung 9 aus dem Gehäuse 2 geführt und ist mit dem anderen Ende an einer Spindel 10 befestigt. Spindel 10 ist durch eine Stopfbuchspackung 11 abgedichtet und mit einer Feder 12 verbunden. Diese Feder 12 ist über die Spindelführung 13 gegen das Gehäuse 2 abgestützt und durch eine Haube 14 geschützt.

Im Ausführungsbeispiel sind die Dichtelemente 3, 4 in funktionstüchtigem Zustand dargestellt. Wie bereits erläutert, können diese Dichtelemente bei hoher Temperatureinwirkung durch Feuer zerstört werden und durch eine metallische Abdichtung ein Durchbrechen des Fluids verhindert werden. Dazu überträgt die Feder 12 ihre Kraft über die Spindel 10 und das Seil 8 auf das vordere Ringteil 6 und setzt diesen — so bald die Festigkeit der Dichtelemente abnimmt — in eine Drehbewegung um seine Längsachse. Durch die Stirnverzahnung auf dem Ringteil 5 wird der Ringteil 6 gleichzeitig in eine Längsbewegung versetzt, bis er sich aus der Verzahnung gehoben hat und am Gehäuse im Bereich des Punktes 15 anliegt. In Schließstellung wird die Absperrklappe 1 in den Ringteil 6 hineingepreßt. Die Steigung der Verzahnung ist so gewählt, daß die von der Feder im gespannten und ungespannten Zustand wirkende Kraft in axialer Richtung etwa gleich groß ist.

## Ansprüche

1. Vorrichtung zur Sicherung der Dichtwirkung eines Absperrelementes (1) mit wenigstens einem Dichtelement (3, 4) zwischen Absperrelement (1) und dem abzudichtenden Gehäuse (2), sowie einem metallenen Dichtring (5, 6), wobei das Dichtelement (4) zwischen einer Stirnseite (6a) des Dichtringes und dem Gehäuse und/oder dem Absperrelement (1) in Schließstellung gehalten wird und der Dichtring aus zwei zylinderförmigen, bezüglich der Zylinderachse hintereinanderliegenden Ringteilen (5, 6) besteht, die über eine Einrichtung zur Verstellung des gegenseitigen Abstandes ineindergreifen, wobei einer der Ringteile (6) mit einer ein parallel zur Zylinderachse liegendes Drehmoment ausübenden Vorrichtung (8, 10, 12, 13) in Verbindung steht und um die Zylinderachse drehbar im Gehäuse (2) gelagert ist, während der andere Ringteil (5) mittels einer Sicherung gegen Drehbewegungen um die Zylinderachse im Gehäuse gelagert ist, dadurch gekennzeichnet, daß das vordere Ringteil (6) nach Zerstörung des Dichtelementes (3, 4) selbstdichtend am Absperrelement (1) und am Gehäuse (2) anliegt, daß die das Drehmoment ausübende Vorrichtung (8, 10, 12, 13) unter Vorspannung arbeitet und daß das Absperrelement eine Absperrklappe (1) ist und die Einrichtung zur Verstellung eine Stirnverzahnung.

2. Vorrichtung nach Anspruch 1, dadurch gekennzeichnet, daß der das Dichtelement (3, 4) nicht berührende Ringteil (5) mit der das Drehmoment ausübenden Vorrichtung (8, 10, 12, 13) in Verbindung steht und in axialer Richtung gegen das Gehäuse (2) abgestützt ist, während der andere Ringteil (6) in einer zur Zylinderachse nur parallele Bewegungen zulassenden Führung gehalten ist.

3. Vorrichtung nach Anspruch 1, dadurch gekennzeichnet, daß der das Dichtelement (3, 4) nichtberührende Ringteil (5) fest mit dem Gehäuse (2) verbunden ist und der andere Ringteil (6) mit der das Drehmoment ausübenden Vorrichtung (8, 10, 12, 13) verbunden ist.

4. Vorrichtung nach einem der Ansprüche 1 bis 3, dadurch gekennzeichnet, daß die Ringteile (5, 6) bei intaktem Dichtelement (3, 4) formschlüssig ineinandergreifen.

5. Vorrichtung nach einem der Ansprüche 1 bis 4, dadurch gekennzeichnet, daß die Zahnflanken der Stirnverzahnung so geformt sind, daß auf das das Dichtelement (3, 4) berührende Ringteil (6) in axialer Richtung eine konstante Kraft ausgeübt wird.

6. Vorrichtung nach einem der Ansprüche 1 bis 5, dadurch gekennzeichnet, daß die Drehmoment ausübende Vorrichtung eine Feder (12) und ein Seil (8) enthält, wobei das Seil am Umfang eines der Ringteile (6) befestigt ist und durch eine Aussparung (7) im Gehäuse (2) geführt, entlang eines Teiles des Ringumfangs am Ringteil anliegend über eine Spindel (10) mit der gespannten Feder (12) verbunden ist..

**Claims**

1. Apparatus for ensuring the sealing action of a shut-off element (1) comprising at least one sealing element (3, 4) between the shut-off element (1) and the housing (2) which is to be sealed, as well as a metal sealing ring (5, 6), where in the closed position the sealing element (4) is held between an end face (6a) of the sealing ring and the housing and/or the shut-off element (1), and the sealing ring consiste of two cylindrical annular components (5, 6) which are arranged one behind the other with respect to the cylinder axis, and which interlock through a device for adjusting their mutual distance, one of the annular components (6) being connected to a device (8, 10, 12, 13) which exerts a torque parallel to the cylinder axis and being mounted in the housing (2) so as to be rotatable about the cylinder axis, whilst the other annular component (5) is mounted in the housing by means of a safety device which prevents rotary movement about the cylinder axis, characterised in that after destruction of the sealing element (3, 4), the front annular component (6) contacts the shut-off element (1) and the housing (2) in a self-sealing manner ; that the torque-exerting device (8, 10, 12, 13) operates under prestress and that the shut-off element is a flap valve (1) and the adjustment device is a spur gear.

2. Apparatus as claimed in Claim 1, characterised in that the annular component (5) which does not contact the sealing element (3, 4) is connected to the torque-exerting device (8, 10, 12, 13), and is supported against the housing (2) in the axial direction, whilst the other annular component (6) is arranged in a guide which permits only movement parallel to the cylinder axis.

3. Apparatus as claimed in Claim 1, characterised in that the annular component (5) which does not contact the sealing element (3, 4) is permanently connected to the housing (2), whilst the other annular component (6) is connected to the torque-exerting device (8, 10, 12, 13).

4. Apparatus as claimed in one of Claims 1 to 3, characterised in that, when the sealing element (3, 4) is intact, the annular components (5, 6) interlock with one another by reason of their shape.

5. Apparatus as claimed in one of Claims 1 to 4, characterised in that the flanks of the teeth of the spur gear are so formed that a constant force is exerted in the axial direction on the annular component (6) which is in contact with the sealing element (3, 4).

6. Apparatus as claimed in one of Claims 1 to 5, characterised in that the torque-exerting device includes a spring (12) and a cable (8), the cable being connected to the periphery of one of the annular components (6), and, after having been led through a recess (7) in the housing (2) along a part of the periphery of the annulus in contact with the annular component, being connected by way of a spindle (10) to the spring under tension (12).

**Revendications**

1. Dispositif pour assurer l'étanchéité d'un élément d'arrêt (1), avec au moins un élément d'étanchéité (3, 4) entre l'élément d'arrêt (1) et le corps à étancher (2), ainsi qu'avec une bague d'étanchéité métallique (5, 6), tandis que l'élément d'étanchéité (4) est maintenu en position de fermeture entre un côté frontal (6a) de la bague d'étanchéité et le corps et/ou l'élément d'arrêt (1) et que la bague d'étanchéité se compose de deux parties annulaires (5, 6), cylindriques et disposées l'une derrière l'autre par rapport à l'axe du cylindre, et qui, par l'intermédiaire d'un dispositif de réglage de la distance réciproque, engrènent l'une dans l'autre, l'une des parties annulaires (6) étant en liaison avec un organe (8, 10, 12, 13) exerçant un moment de torsion parallèle à l'axe du cylindre et étant logé dans le corps (2) de façon à pouvoir tourner autour de l'axe du cylindre, tandis que l'autre partie annulaire (5) est logée dans le corps au moyen d'une sûreté empêchant ces déplacements de rotation autour de l'axe du cylindre, caractérisé en ce que la partie annulaire avant (6), après destruction de l'élément d'étanchéité (3, 4), vient s'appuyer de façon auto-étanche sur l'élément d'arrêt (1) et le corps (2), en ce que l'organe (8, 10, 12, 13) exerçant le couple de torsion travaille sous précontrainte et en ce que l'élément d'arrêt est un clapet d'arrêt (1) et le dispositif de réglage un crantage à denture frontale.

2. Dispositif selon la revendication 1, caractérisé en ce que la partie annulaire (5) qui n'est pas en contact avec l'élément d'étanchéité (3, 4) est en liaison avec l'organe (8, 10, 12, 13) exerçant le moment de torsion et s'appuie dans le sens axial contre le corps (2), tandis que l'autre partie annulaire (6) est maintenue dans un guidage n'autorisant que des déplacements parallèles à l'axe du cylindre.

3. Dispositif selon la revendication 1, caractérisé en ce que la partie annulaire (5) qui n'est pas en contact avec l'élément d'étanchéité (3, 4) est liée à demeure au corps (2), l'autre partie annulaire (6) étant liée à l'organe (8, 10, 12, 13) exerçant le moment de torsion.

4. Dispositif selon l'une des revendications 1 à 3, caractérisé en ce que les parties annulaires (5, 6), quand l'élément d'étanchéité (3, 4) est intact, s'engrènent selon des formes complémentaires.

5. Dispositif selon l'une des revendications 1 à 4, caractérisé en ce que les flancs des dents du crantage présentent un profil tracé de telle sorte qu'une force constante soit exercée dans le sens axial sur la partie annulaire (6) en contact avec l'élément d'étanchéité (3, 4).

6. Dispositif selon l'une des revendications 1 à 5, caractérisé en ce que l'organe exerçant le moment de torsion contient un ressort (12) et un câble (8), et en ce que le câble est fixé à la périphérie de l'une des parties annulaires (6) et tout étant guidé à travers un évidement (7) du corps (2), est lié par l'intermédiaire d'un arbre (10) au ressort (12) mis sous contrainte en s'appuyant le long d'une partie de la périphérie de la partie annulaire.

0 024 036

Fig.1

5b
5
2
6a
6
6b
5a
4
15
1
3
8
7
II
II
1

Fig. 2

2

0 024 036